# EUROPEAN PATENT APPLICATION

(11) **EP 1 672 834 A1**
(43) Date of publication of application: **21.06.2006**
(21) Application number: 05301076.5
(22) Date of filing: 19.12.2005
(51) Int. Cl.: H04L 12/26, H04L 29/06

(54) **Application session management for flow-based statistics**

(30) Priority: 20.12.2004 US 14949
(71) Applicant: Alcatel, 75008 Paris (FR)
(72) Inventor: Strub, Lyle, Ontario K2C 2G2, Ottawa (CA)
(74) Representative: Hervouet, Sylvie

(57) **Abstract**

A flow monitoring system for obtaining flow-based statistics in a communications network is described. An application session management (ASM) function is incorporated into the system to allow flow-based statistics to be customized in relation to network applications. This is accomplished by having the ASM interface with the usual flow monitoring functionality and network applications to collect and process flow statistics, and to customize exported data to match application requirements.

## Description

### Field of the invention

This invention relates to traffic flow monitoring in communications networks and more particularly to systems and methods that relate flow statistics gathering to network applications.

### Background of the invention

Flow-based statistics classify network traffic using information extracted from packet headers and can provide a much greater degree of traffic visibility than interface-based packet counts. These statistics are becoming an important tool to help manage routed networks efficiently and to enable the deployment of advanced network services.

Network applications that benefit from flow-based statistics include Usage-Based Billing, Service Level Agreement (SLA) Monitoring, Traffic Engineering, Traffic Profiling, Network Security Systems and Network Troubleshooting. Of these applications, Billing and SLA Monitoring are end-to-end network services, only deployed at the edges of the network, but the others can and will be deployed at all network positions including access, edge and core. It is likely, therefore, that a node at any network position would provide flow statistics to multiple applications, and an Edge Router could reasonably be expected to support all of these applications to some degree.

Although all of the above network applications make use of flow-based statistics, they all have different requirements with respect to the granularity of flows, i.e. what fields are included in the flow definition, and/ or the precision of statistics, as determined by the sampling rate. Existing flow monitoring systems do not take into account the variation in application requirements and instead are either provisioned to support a single network application or else attempt to provide the "least common denominator" among the requirements and export an excessive amount of data which consumes an unacceptable amount of network bandwidth.

NetFlow, a product of Cisco Systems Inc., is by far the most significant flow monitoring solution in existence today. Not only is it widely available on deployed routers, but many off-node tools have been developed to analyze and display NetFlow data. While other examples of flow statistics systems exist, for the purposes of 1) deployment on network routers of various sizes and 2) support of multiple simultaneous applications, it represents not only the market leader but also the technological state-of-the-art. While the term "NetFlow" will be used in the following discussion it is to be understood that all analysis herein also applies to "NetFlow-like" systems deployed by other suppliers.

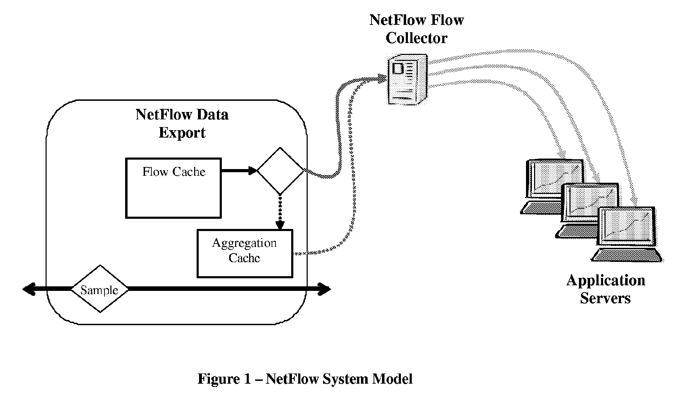

The NetFlow architecture has three major components, as shown in Figure 1. The first and most important is the "NetFlow Data Export" feature included in the Internetwork Operating System (IOS) software deployed on network nodes. When NetFlow is enabled a "flow cache" is maintained in the datapath based on 5-tuple information (i.e. source IP address, destination IP address, source TCP/ UDP port, destination TCP/ UDP port, protocol type) extracted from the Layer 3 and Layer 4 packet headers. Cache management software determines how long a given flow cache entry has been inactive, and exports flow records once they have expired. The flow records may also pass through an optional aggregation cache.

After eviction from the flow cache or aggregation cache flow records are exported to a "NetFlow Flow Collector". In most cases the Collector is run on a server in the management network that is dedicated solely to receiving flow records. After potentially compressing and/ or storing the received data, the flow statistics are exported to network applications at the Central Office.

The number of "flows" that may be monitored in a datapath will always be a function of the embedded memory reserved for the flow cache and the number of datapath cycles available to process the flow records. Therefore, monitoring flows with high granularity (i.e. the higher the granularity, the more flows that will be created from the same observed traffic stream) with high precision (i.e. full line rate or a high sampling rate) will generally consume an enormous amount of both memory and processor cycles. Since the resources available for collecting the statistics are limited and often scarce, collecting flow-based statistics in switches and routers requires either limiting the flow granularity or the precision to match these limitations. Depending on the actual usage of the statistics at the network application level either one of these solutions, or a combination of both, may be the preferable solution.

The NetFlow flow definition, however, has no means of changing the flow granularity but instead must limit the sampling rate to avoid over-consumption of datapath resources. NetFlow flow records in the flow cache have a fixed and inflexible format, representing the collection of "least common denominator" data for all flows, regardless of actual usage of the data. The need for this approach is a direct consequence of the lack of "application knowledge" at the node level.

As shown in Figure 1 the aggregation scheme employed by the newest versions of NetFlow decreases exported flow granularity but actually increases the embedded resource requirements for memory and processor cycles since the aggregation cache is maintained separately from the flow cache.

Although the low level data collected by the NetFlow meter provides a great deal of detail which may be used by network applications, exporting all of this detail off-node requires an enormous amount of bandwidth. With all flow record data exported, off-node summarization of statistics for applications is possible but represents a very inefficient usage of bandwidth and servers in the management network. Furthermore, since network applications are interested only in statistics based on the observed flows and not inherently in the flow records themselves, the additional data serves only to increase the processing requirements of applications, decrease response time to network events and disguise significant details in a sea of excessive detail.

In practice the export bandwidth is limited by sampling the incoming packet streams, at the expense of statistical accuracy, and recent versions of NetFlow offer the ability to "aggregate" flow records in several pre-determined patterns to partially adjust the exported flow granularity to a more appropriate level for certain applications. The ability to customize the format of the exported flow record to some degree is also available in the newest NetFlow version. While these advances have attempted to address the export bandwidth problem of the NetFlow architecture, they fall far short of a complete solution.

The aggregation and customization abilities of NetFlow and NetFlow-like systems are limited to a predetermined and limited set of options. The exported flow records using these capabilities may take somewhat less bandwidth, but the node lacks the ability to interpret the flow records to produce more meaningful summaries of network events. Furthermore, the provisioning of these features is static, and requires the intervention of an experienced operator, since any changes to the scheme in response to network conditions affect all services that use the exported data (i.e. have a "global impact" on applications).

The lack of application knowledge prevents the inclusion of more powerful node-resident tools to create statistics that are directly meaningful at the network level. The lack of "session context" ensures that any changes to the NetFlow process have a global impact on all connected network applications. The ability, therefore, to apply aggregation and customization abilities offered by NetFlow to address multiple application situations, and applications with changing requirements, is severely limited.

Since all useful summaries of NetFlow data are produced by off-line analysis, the ability of an operator to respond to network events in timely manner is greatly compromised. Not only is it impossible to embed any real-time response in the network itself, but it is necessary to wait for off-line processing of the massive amounts of exported data to occur before network events can be detected and acted upon.

The requirements of a network application from a flow monitoring system will often be event-driven but it is impossible to reflect this model in a NetFlow or NetFlow-like system. For example, a network security application will have very different real requirements during normal operation as compared to during a suspected attack situation. Without the ability to adjust the flow monitoring process in real time, the security application must always receive data as though an attack is in progress, which is very wasteful of bandwidth during normal operational circumstances. Again, this "least common denominator" situation is created by the lack of application knowledge and the ability to isolate individual application session from each other.

### Summary of the invention

The present invention addresses the problem of optimizing flow-based statistics reporting to multiple network applications simultaneously with the minimum necessary amount of exported data bandwidth. This is achieved through the introduction, into a network node, of an application session management (ASM) function that interfaces between the flow meters and network applications. The ASM layer uses application knowledge to collect and process flow statistics, and to customize exported data to match application requirements.

Therefore, in accordance with the first aspect of the present invention there is provided a method of collecting flow statistics at a network node in a communications network comprising: providing an application session management (ASM) function to interface with network applications, the ASM collecting information about the actual flow statistics needs of the applications; and maintaining individual session information for each application.

According to a second aspect of the present invention there is provided a system for collecting flow statistics at network node in a communications network comprising: an application session management (ASM) function to interface with the node's embedded flow monitoring subsystem, the ASM affecting the operation of the flow monitoring subsystem such that the embedded resources are used to best monitor the traffic flows specified by the network applications; and means for managing the node flow monitoring subsystem as application needs change..

In accordance with the third aspect of the present invention there is provided a system for collecting flow statistics at network node in a communications network comprising: an application session management (ASM) function to receive the traffic flow counters from the embedded flow monitoring subsystem and use this data to generate statistics in accordance with the needs of the network applications; and means for exporting the generated statistics in a manner specified by the application during session initialization.

### Brief description of the drawings

The invention will now be described in greater detail with reference to the attached drawings wherein:
FIG. 1 shows a prior art flow system model;
FIG.2 illustrates the application session management of the present invention at a network level; and
FIG. 3 illustrates the application session management feature in a network node.

### Detailed description of the invention

In the context of this document, "network applications" are management functions that run outside of the networking equipment but use network traffic information and statistics to manage the network infrastructure and/ or provide network-based data services. Applications use "flow-based statistics" to obtain information about certain types of traffic moving through the network but the actual traffic type, and therefore the meaning of "flow", is application dependent.

The true requirement for flow-based statistics from a particular observation point varies greatly between network applications. In order to minimize the amount of exported data without reducing the potential application base it is necessary to incorporate a degree of application knowledge at the node level. This invention proposes the inclusion of an "Application Session Management" layer in a flow monitoring system.

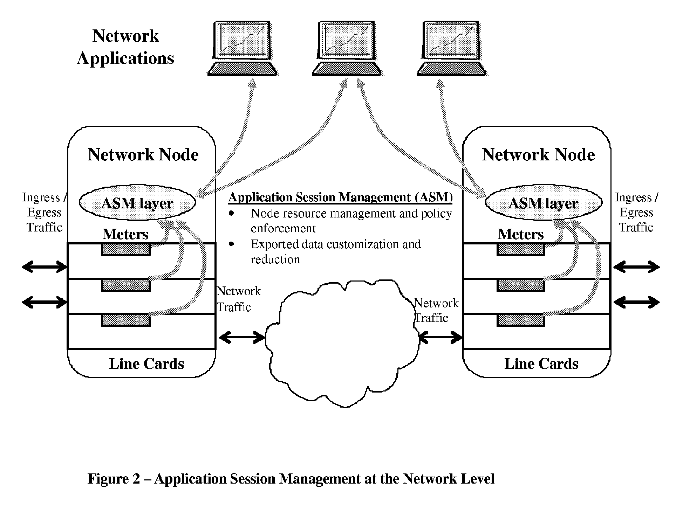

"Application sessions" represent the current set of flow statistics requirements of a process that is connected to the flow monitoring system. The Application Session Management (ASM) layer serves as a software intermediary between network applications and the traditional flow statistics collection subsystem. This layer provides the interface to all clients of the flow monitoring system that allows the opportunity for consistent, and potentially standardized, communication. This interface collects application requirements and then uses this knowledge to optimize the use of both embedded resources and network bandwidth. The Application Session Management layer's role in the flow monitoring system is illustrated in Figure 2.

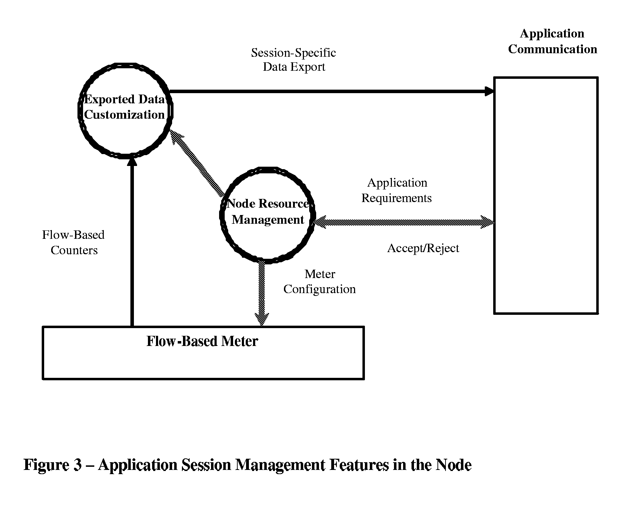

The ASM layer uses application knowledge to provide node-resident intelligence in two key functions. The first is the management of embedded resources in order to collect and process flow statistics. The second is the customization of the exported data to match the application requirements. The details of these functions are presented in the following description and are illustrated in Figure 3.

The Node Resource Management function of the ASM layer takes application level requirements as input and uses this to configure the flow monitoring resources available in the datapath. The datapath resident portion of a flow monitoring system is often referred to as a "meter", and the term "meter resources" is used herein to describe the memory and processor cycles available for creating and maintaining flow-based counters in the datapath. There are three primary capabilities necessary for this function.

First, the ASM includes the capability of translating application-level requirements to node-level configuration details. The output of this step is a particular meter configuration that could be used to achieve the output requirements of the application session.

Following translation, the ASM evaluates the "application request" as to the impact on meter resources. It is likely that any given node will have multiple application sessions simultaneously and is certain that many application requirements will translate into non-complimentary resource configurations. Since meter resources are finite, applications compete for these resources.

After resource evaluation the ASM includes a decision-making stage that allows the rejection of application requests which would have a negative impact on node operation or other application sessions. This stage may also incorporate the ability to evaluate requests based on specified policy rules involving priorities among network applications and restrictions on individual resource usage.

There are several advantages that are realized through this operation. By providing translation abilities in the ASM the design and control of the meter resources is hidden from network operators and applications. Much like a Hardware Abstraction Layer in firmware design, this allows operators and applications a framework to understand and assess the flow monitoring abilities of a node without requiring intimate knowledge of the node's structure or current configuration.

Since the allocation of meter resources is done by the ASM there is an opportunity for optimizations in configuration that might be impossible without this layer. The ASM has knowledge of all application session requirements, total meter resources and the current meter configuration at any time, and uses this knowledge to ensure the optimal use of resources in all situations.

The ability of the system to provide session independence is a key driver and advantage of this feature. Since the meter configuration details (and associated resource usage) that are specific to a given application session are identified independently, the opportunity exists to alter any given session without affecting other sessions. This independence further allows for automatic control to be implemented in applications without the requirement for operator intervention.

The Exported Data Customization feature of the ASM takes flow-based counters as input and uses this data to generate summary statistics and records that are formatted to meet the needs of application sessions while using the minimum network bandwidth necessary for export. There are three capabilities which are fundamental to accomplishing this task.

After receiving the flow-based counters from the datapath, the ASM will evaluate the flow records against the desired flow definition for each application session. This allows aggregation and correlation of flow records to be performed that were not possible or practical in the datapath.

The low-level flow data may be further processed to produce higher-level statistics that reflect the true requirements of the application. For example, an application may need to know what percentage of observed traffic is attributable to a given flow. This operation is optimally performed on the node to reduce the volume of exported data.

Once the flow data has been processed to the required level, it will be formatted for output. Since the export function is not tied to the flow record format (as it is with NetFlow) flexibility is introduced at this stage and the export may consist of flow records, summary statistics or both.

Optimally, data export should correspond to the minimum bandwidth necessary to achieve application objectives. The post-processing performed on flow records by the ASM can be used to drastically reduce the exported data bandwidth. Furthermore, the data which is sent to client applications meets their specific and current needs, so further processing by the application is reduced and the response time to observed events is shortened. Providing inherent flexibility in supported export formats also allows fast adaptation to changing requirements as network applications and protocols evolve over time.

As discussed earlier, NetFlow and NetFlow-like systems use static flow definitions and therefore do not have the ability to meet application requirements by adjusting both flow granularity and precision to the combined best levels. As far as Applicant is aware no existing system incorporates the ability to optimize flow statistics collection to best match the meter resources available in the network node to the needs of applications using the exported data. The Application Session Management layer introduced here provides the translation of application level requirements to meter configurations that make optimal use of scarce embedded resources in the network node. The ASM provides the capability to further optimize the meter and node resources between individual application sessions by incorporating policy-based decision making abilities. The combination of individual session-based management, with global decision-making functionality is an advantage over existing statistics collection systems.

The NetFlow system is inherently wasteful of network bandwidth and this fact has limited its use despite the increasing need for flow-based statistics at the application level. The Application Session Management layer drastically reduces export bandwidth by applying intelligent flow record reduction and statistics summarization on the network node based on the direct requirements of the application sessions. The potential for drastic reduction in exported data bandwidth offered by this invention is a potentially huge advantage.

Without the ability to distinguish between individual application sessions, experienced network operators are required to evaluate the global impact of any changes to the configuration of a NetFlow-like system. By tracking application sessions individually, this invention allows the potential automation of session changes. This makes possible new models of application interaction, including automated real-time response to detected network events.

Although particular embodiments of the invention have been described and illustrated it will be apparent to one skilled in the art that numerous changes can be made without departing from the basic concepts. It is to be understood, however, that such changes will fall within the full scope of the invention as defined by the appended claims.

## Claims

1. A method of collecting flow statistics at a network node in a communications network comprising:
providing an application session management (ASM) function to interface with the network applications, the ASM collecting information about the actual flow statistics needs of the applications; and
maintaining individual session information for each application.

2. The method as defined in claim 1 wherein the ASM establishes an individual session for each application to maintain application specific flow definitions and export requirements.

3. The method as defined in claim 1 wherein the ASM processes multiple simultaneous sessions without operator intervention.

4. The method as defined in claim 1 wherein the ASM includes the ability to translate network application-level requirements to network node-level configuration details.

5. The method as defined in claim 4 wherein, after the translation step, the ASM evaluates the network node-level details with respect to impact on embedded resources.

6. The method as defined in claim 5 wherein, during the evaluation, the ASM applies specific policy rules involving priorities among network applications and restrictions on individual resource usage.

7. The method as defined in claim 5 wherein after evaluation the ASM decides whether the impact on resources is acceptable and if not the ASM is allowed to reject the request from the application session.

8. The method as defined in claim 1 wherein, at any point after an application session has been established, the ASM allows the application to modify its flow monitoring requirements dynamically without operator intervention.

9. A method of collecting flow statistics at a network node in a communications network comprising: providing an application session management (ASM) function to interface with an embedded flow monitoring subsystem at the node, the ASM affecting the operation of the flow monitoring subsystem such that the embedded resources are used to best monitor the traffic flows specified by the network applications; and means for managing the node flow monitoring subsystem as application needs change.

10. The method as defined in claim 9 wherein the ASM combines the node-level flow monitoring requirements of multiple individual sessions to create a composite requirement for the flow monitoring subsystem.

11. The method as defined in claim 9 wherein, during the consolidation of all requirements, the ASM optimizes the result to allow for the most efficient usage of embedded resources, including memory and processing cycles.

12. The method as defined in claim 9 wherein the ASM uses the resulting consolidated flow monitoring requirements to configure the embedded flow monitoring subsystem of the network node.

13. The method as defined in claim 9 wherein, if monitoring requirements are modified during normal operation, the ASM will perform a reconfiguration of the flow monitoring subsystem to reflect the changes.

14. A method of collecting flow statistics at a network node in a communications network comprising: providing an application session management (ASM) function to receive the traffic flow counters from the embedded flow monitoring subsystem and use this data to generate statistics in accordance with the needs of the network applications; and means for exporting the generated statistics in a manner specified by the application during session initialization.

15. The method as defined in claim 14 wherein the ASM parses the traffic flow counters from the flow monitoring subsystem in order to determine to which application session or sessions the individual counters will contribute.

16. The method as defined in claim 14 wherein the ASM consolidates all flow counters associated with an application session.

17. The method as defined in claim 14 wherein the ASM uses the consolidated flow counters to generate statistical data, such as sums, ratios, averages and variances, as required for an application session

18. The method as defined in claim 14 wherein the ASM may compare the collected and generated flow statistics to session specific thresholds in order to determine whether the data should be exported, discarded, an alarm raised or other appropriate action taken.

19. The method as defined in claim 14 wherein the ASM formats collected and generated flow statistics for each application session for off-node export in a manner that is customized to the application.

20. The method as defined in claim 14 wherein the ASM, instead of exporting the flow statistics from the network node, sends this data directly to another process embedded on the network node.

21. A system for collecting flow statistics at network node in a communications network comprising: an application session management (ASM) function to interface with the node's embedded flow monitoring subsystem, the ASM affecting the operation of the flow monitoring subsystem such that the embedded resources are used to best monitor the traffic flows specified by the network applications; and means for managing the node flow monitoring subsystem as application needs change..

22. A system for collecting flow statistics at network node in a communications network comprising: an application session management (ASM) function to receive the traffic flow counters from the embedded flow monitoring subsystem and use this data to generate statistics in accordance with the needs of the network applications; and means for exporting the generated statistics in a manner specified by the application during session initialization.
